# EUROPÄISCHE PATENTSCHRIFT

(11) **EP 1 690 811 B1**
(45) Veröffentlichungstag und Bekanntmachung des Hinweises auf die Patenterteilung: **02.05.2007**
(21) Anmeldenummer: 05027444.8
(22) Anmeldetag: 15.12.2005
(51) Int. Cl.: B65G 19/02, B61B 10/02

(54) **Transport-System für hängende Gegenstände**
Transport system for suspended articles
Système de transport pour des articles suspendus

(30) Priorität: 12.02.2005 DE 102005006455
(43) Veröffentlichungstag der Anmeldung: 16.08.2006
(73) Patentinhaber: DÜRKOPP ADLER AKTIENGESELLSCHAFT, 33719 Bielefeld (DE)
(72) Erfinder: Janzen, Paul, 33619 Bielefeld (DE); Wend, Michael, 33619 Bielefeld (DE)
(74) Vertreter: Rau, Manfred

(56) Entgegenhaltungen:
- EP-A- 1 273 534
- DE-U1- 29 709 547
- US-A- 5 819 906

## Beschreibung

Die Erfindung betrifft ein Transport-System für hängende Gegenstände nach dem Oberbegriff des Anspruches 1.

Aus der DE 295 19 354 U1 ist ein Transport-System bekannt, bei dem die Halteelemente in der Transport-Schiene mittels mehrerer Paare von Laufrollen oder Führungsrollen fest geführt sind. An der oberhalb der Halteelemente angeordneten Antriebs-Kette sind Mitnehmer ausgebildet, die klinkenartig in die Oberseite der Halteelemente eingreifen. Diese Ausgestaltung ist außerordentlich aufwändig.

Aus dem DE 297 09 547 U1 ist ein Transport-System bekannt, in dem an einem Bügelträger einer Laufrolle und darunter zwei Stützrollen angeordnet sind, die sich gegen eine Laufschiene abstützen und so ein Pendeln des Bügelträgers verhindern.

Der Erfindung liegt die Aufgabe zugrunde, das Transport-System der gattungsgemäßen Art so weiterzubilden, dass es sehr einfach und betriebssicher ist.

Diese Aufgabe wird erfindungsgemäß durch die Merkmale im Kennzeichnungsteil des Anspruches 1 gelöst.

Durch die erfindungsgemäßen Maßnahmen wird erreicht, dass sowohl die Antriebs-Kette als auch die in der Transport-Schiene verfahrbaren Halteelemente äußerst einfach aufgebaut sind. Bei der Antriebs-Kette kann es sich um eine einfache Duplex-Kette handeln, bei der der zweite Satz Rollen und Verbindungslaschen weggelassen ist, wobei dann der überstehende Abschnitt der Achsbolzen als Mitnehmer dient. Die Mittel zur Verhinderung eines Außereingriffbringens von Mitnehmer und Haltelement bestehen aus einem nach oben ragenden Ansatz mit einem sich quer erstreckenden Anschlag, wobei der Anschlag bei einer maximal zulässigen Neigung des Halteelementes gegenüber einer Normalen auf die Transport-Schiene zur Anlage an einen Begrenzungs-Steg kommt, wodurch eine weitere Neigung unterbunden wird und der Ansatz mit dem Anschlag weiterhin in Eingriff mit dem Mitnehmer bleibt. Derartige Neigungen können zum einen bei Steigungen der Transport-Schiene oder aber auch bei unbeabsichtigten Pendelbewegungen der transportierten Gegenstände auftreten.

Zahlreiche vorteilhafte Ausgestaltungen ergeben sich aus den Unteransprüchen.

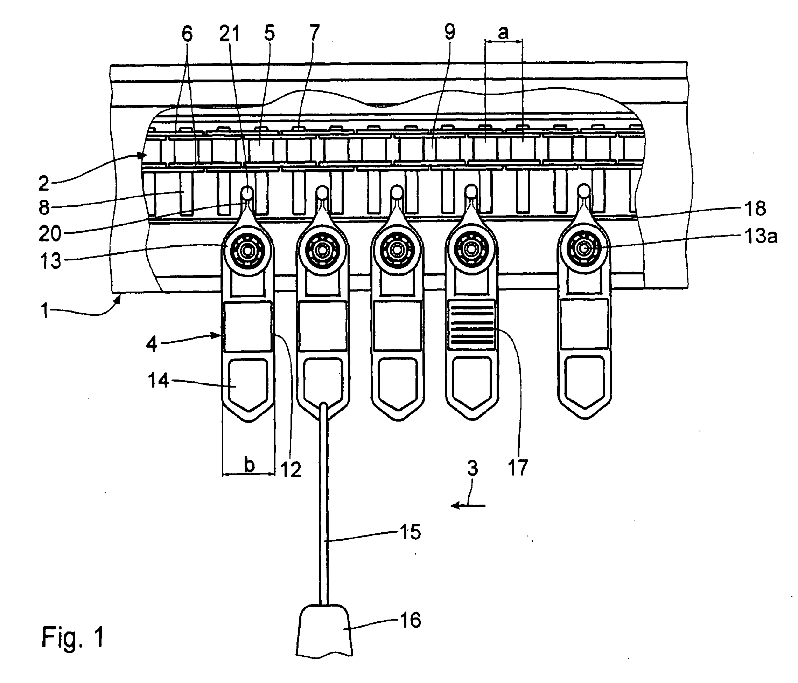

Einzelheiten der Erfindung ergeben sich aus der nachfolgenden Beschreibung eines Ausführungsbeispiels anhand der Zeichnung. Es zeigt
- Fig. 1: eine Seiten-Längsansicht eines Teils eines erfindungsgemäßen Transport-Systems,

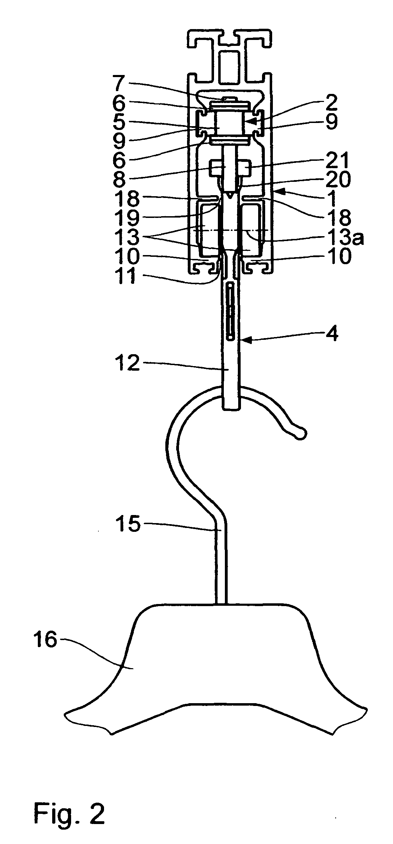

- Fig. 2: einen Querschnitt entsprechend der Schnittlinie II-II in Fig. 1,
- Fig. 3: das Transport-System in einer Darstellung entsprechend Fig. 1 mit Darstellung unterschiedlicher Neigungen der Halteelemente relativ zur Transport-Schiene,
- Fig. 4: ein Halteelement in einer perspektivischen vergrößerten Darstellung,
- Fig. 5: eine Seiten-Längsansicht eines Teils des Transport-Systems mit einer Weiche und
- Fig. 6: einen Horizontalschnitt gemäß der Schnittlinie VI-VI in Fig. 5.

Das in der Zeichnung dargestellte Transport-System weist eine Transport-schiene 1 auf, die mittels geeigneter Trageinrichtung in einem Raum verlegbar ist. In der als Hohl-Kasten-Profil ausgebildeten Transport-Schiene ist eine Antriebs-Kette 2 angeordnet, die mittels nicht dargestellter Antriebsmittel in einer Förderrichtung 3 antreibbar ist. Weiterhin sind Halteelemente 4 vorgesehen, die mittels der Antriebs-Kette 2 in der Transport-Schiene 1 bewegbar sind.

Bei der Antriebs-Kette 2 handelt es sich um eine so genannte Rollen-Kette, die Rollen 5 aufweist, die in geringem Abstand voneinander mittels Verbindungs-Laschen 6 miteinander verbunden sind. Die Bolzen 7 weisen nach unten vorstehende, als Mitnehmer 8 dienende bolzenförmige Verlängerungen auf. Die Bolzen 7 mit den Mitnehmern 8 verlaufen normal zur Transport-Schiene 1 in einer durch die Förderrichtung 3 aufgespannten Vertikal-Ebene.

Die Antriebs-Kette 2 ist in Richtung der Bolzen 7, also senkrecht und quer zur Förderrichtung 3 mittels die Verbindungs-Laschen 6 untergreifende Führungen 9 in der Transport-Schiene 1 geführt und gehalten.

Der Mittenabstand a benachbarter Mitnehmer 8 in der Transport-Schiene in Förderrichtung 3 entspricht exakt der Teilung der Kette 2 und ist insoweit unveränderbar und konstant.

An der Unterseite der Transport-Schiene 1 sind zwei aufeinander zu gerichtete Führungs-Stege 10 ausgebildet, zwischen denen ein sich in Längsrichtung der Transport-Schiene 1, also in Förderrichtung 3, erstreckender Schlitz 11 ausgebildet ist bzw. begrenzt wird. Durch diesen Schlitz 11 ragt ein flaches Tragteil 12 jedes Halteelementes 4 nach unten aus der Transport-Schiene heraus. In seinem oberen Bereich weist das Halteelement 4 beiderseits des Tragteils 12 je eine Laufrolle 13 auf, die sich jeweils auf einem der beiden Führungs-Stege 10 abstützt und hierauf in Förderrichtung 3 verschiebbar ist. Es ist also nur ein Paar von Laufrollen 13 vorhanden, die um eine gemeinsame Achse 13a drehbar sind, sodass das gesamte Halteelement 4 in der Transport-Schiene um diese Achse pendeln kann. Wenn von Neigung oder Neigung gegenüber der Transport-Schiene 1 die Rede ist, dann ist damit die Neigung gegenüber einer Normalen auf die Transport-Schiene 1 in einer durch die Förderrichtung 3 definierten Vertikalebene gemeint.

Das Tragteil 12 weist an seinem unteren Ende eine Aufnahme-Öffnung 14 auf, in die ein Haken 15 eines Bügels 16 einhängbar ist, auf dem beispielsweise ein nicht dargestelltes, zu transportierendes Kleidungsstück hängt. Zwischen der Aufnahme-Öffnung 14 und der Unterseite der Transport-Schiene 1 ist ein Identifizierungs-Element 17 angeordnet, bei dem es sich um einen Transponder oder auch einen Barcode oder dergleichen handeln kann. Das Identifizierungs-Element 17 verläuft entsprechend der Anordnung des plattenartigen Tragteils 12 in Förderrichtung 3, liegt also mit seiner Hauptfläche offen quer zur Förderrichtung 3, also zur Seite hin. Es ist damit über ein Identifizierungsgerät eindeutig erfassbar, da es nicht in Überdeckung mit anderen Identifizierungs-Elementen 17 kommt.

Ein Bügel 16 mit einem zu transportierenden Gegenstand bleibt nach dem Einhängen in ein Halteelement 4 während des gesamten Transportvorgangs an diesem Halteelement 4, ist mit diesem also gleichsam "verheiratet". Der zu transportierende Gegenstand wird also gleichsam über das Identifizierungs-Element 17 und damit das Halte-Element 4 gesteuert. Da wiederum der gesamte Transport von der Antriebs-Kette 2 her erfolgt, ist es sehr wichtig, dass ein Halteelement 4 während des Transports eine absolut eindeutige Position relativ zur Antriebs-Kette 2 einnimmt. Zur Erzielung dieses Effektes dienen folgende Maßnahmen:

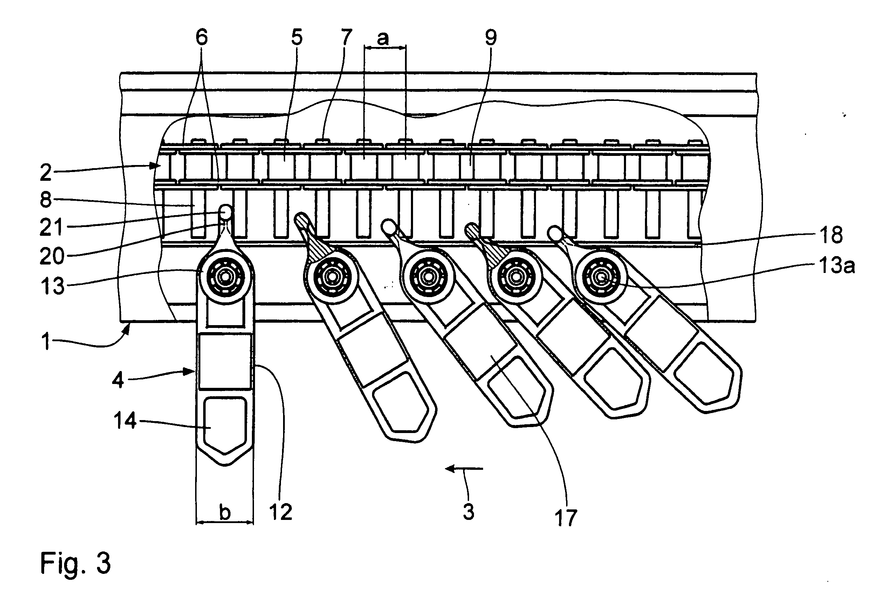

Die Transport-Schiene 1 weist unmittelbar oberhalb der Laufrollen 13 aufeinander zu gerichtete horizontale Begrenzungs-Stege 18 auf, die zwischen sich einen Schlitz 19 begrenzen. Durch diesen Schlitz 19 erstreckt sich ein stielartiger Ansatz 20 des Halteelementes 4, der einstückig mit dem Tragteil 12 an dessen oberem Ende ausgebildet ist. Am oberen Ende dieses stielartigen Ansatzes 20 ist ein Anschlag 21 nach Art eines Querriegels ausgebildet, dessen Erstreckung horizontal quer zur Förderrichtung 3 größer ist als die Breite des Schlitzes 19, sodass bei einem Neigen des Halteelementes 4 gegenüber der Transport-Schiene 1, wie es in Fig. 3 dargestellt ist, dieser Anschlag 21 zur Anlage auf den Begrenzungs-Stegen 18 kommt und somit eine weitere Neigung der Halteelemente 4 verhindert. Der Ansatz 20 und der Anschlag 21 haben also die Grundform eines Hammers.

Die Mitnehmer 8 der Antriebs-Kette 2 erstrecken sich bis unmittelbar oberhalb der Begrenzungsstege 18, sodass ein zwischen zwei Mitnehmern 8 befindliches Halteelement 4 immer zuverlässig mitgenommen wird, also nicht außer Eingriff mit dem Mitnehmer 8 kommt. Wie Fig. 3 weiterhin erkennen lässt, kommen benachbarte Halteelemente 4 in ihrer stärkst geneigten Stellung nicht zur Anlage aneinander. In diesem Zusammenhang ist darauf hinzuweisen, dass benachbarte Halteelemente 4 mindestens im doppelten Abstand a zweier benachbarter Mitnehmer 8 in der Transport-Schiene 1 angeordnet sind. Um dies sicherzustellen, ist die Erstreckung b der Halteelemente 4 in Förderrichtung 3 größer als der Mittenabstand a benachbarter Mitnehmer 8. Hierfür gilt auch die Aussage zur Nichtberührung bei stärkst möglicher Neigung. Der Grund liegt darin, dass der Abstand a benachbarter Mitnehmer 8 möglichst klein sein soll, damit die Halteelemente 4 und damit die von ihnen getragenen Gegenstände eine möglichst exakt definierte Lage relativ zur Antriebs-Kette 2 aufweisen.

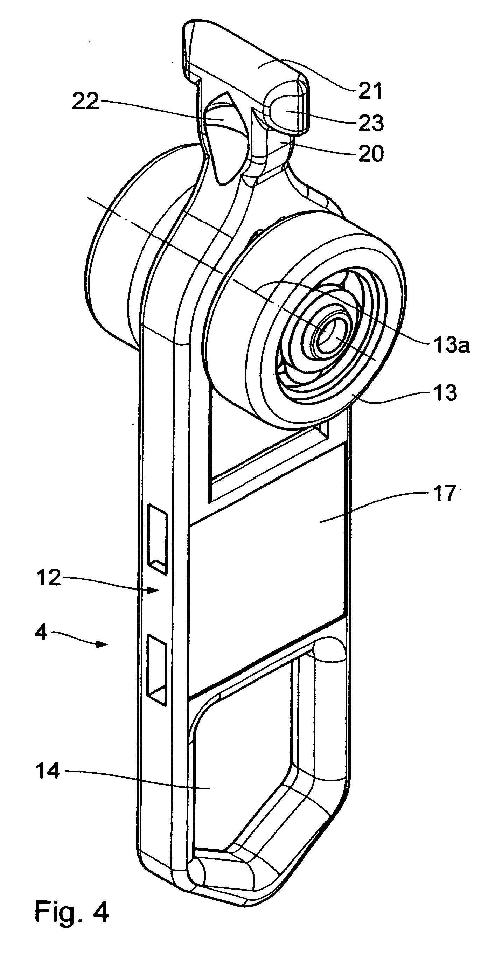

Wie Fig. 4 erkennen lässt, weist der stielartige Ansatz 20 unmittelbar vor dem Übergang auf den quer verlaufenden Anschlag 21 jeweils eine Auskehlung 22 auf, in die das untere Ende des Mitnehmers 8 bei gegenüber der Transport-Schiene 1 geneigtem Halteelement 4 eingreift. Die Auskehlung 22 tritt also insbesondere in Steigungs-Strecken in Funktion. Die beidseitig vorstehenden Anschläge 21 sind an ihren Enden mit Keilflächen 23 versehen, die ein störungsfreies Einschleusen oder Ausschleusen der Halteelemente 4 an einer Weiche 24 ermöglichen, wenn also eine Relativbewegung quer zur Förderrichtung 3 zwischen einem Mitnehmer 8 und einem Anschlag 21 erfolgt.

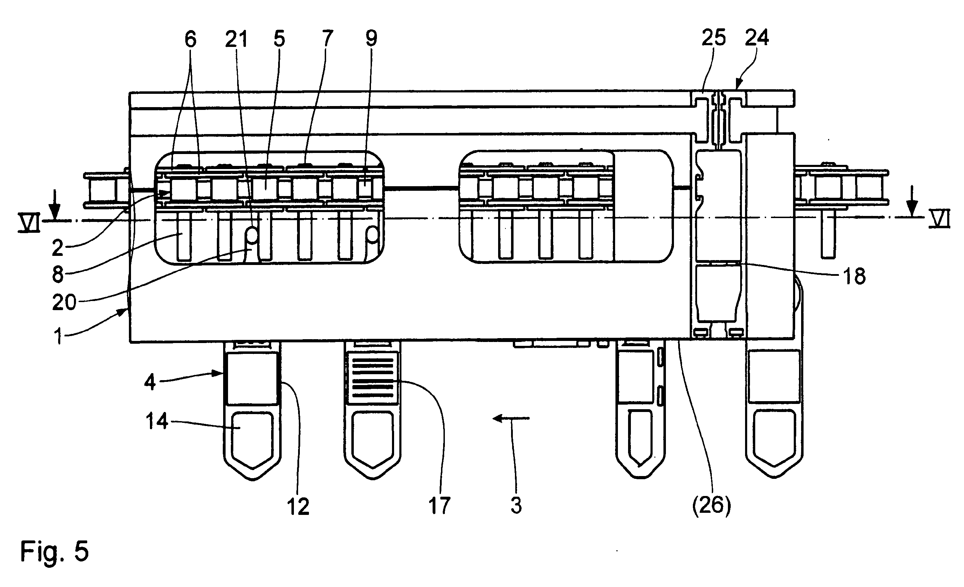

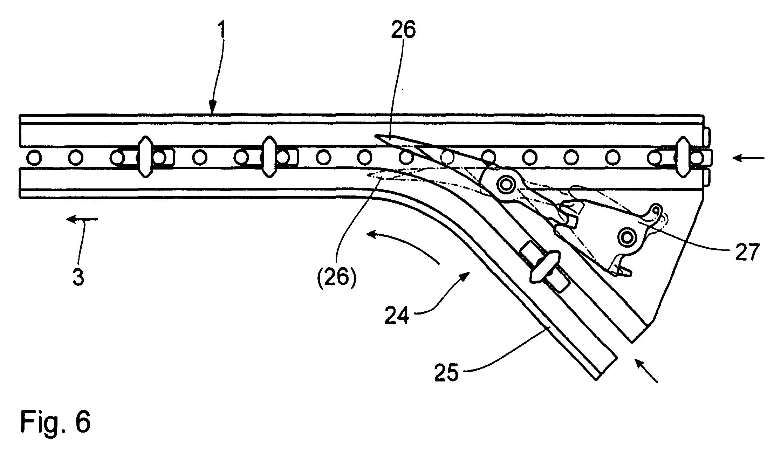

In Fig. 5 und 6 ist eine Weiche 24 dargestellt, die bei der dargestellten Förderrichtung 3 als Einschleus-Weiche dient. Wenn die Förderrichtung 3 umgekehrt wäre, würde sie als Ausschleus-Weiche dienen. Sie weist eine in die Transport-Schiene 1 einmündende Seiten-Schiene 25 auf, und eine Weichen-Zunge 26, die an der Unterseite der Transport-Schiene angeordnet ist. Die Weichen-Zunge 26 macht bei entsprechend Fig. 6 eingeschwenktem Zustand den Zuführweg von der Seiten-Schiene 25 in die Transport-Schiene 1 auf, sodass über die Seiten-Schiene 25 zugeführte Halteelemente 4 in die Transport-Schiene 1 zwischen jeweils benachbarte Mitnehmer 8 eingeführt werden können. Die Betätigung erfolgt mittels einer Klinke 27, die von einem nicht dargestellten Weichen-Schwenkantrieb, beispielsweise einem pneumatisch beaufschlagbaren Kolben-ZylinderAntrieb, betätigt wird. Wenn die Weichen-Zunge 26 in ihre in Fig. 6 strichpunktiert dargestellte Stellung verschwenkt ist, dann wird die Seiten-Schiene 25 verschlossen, sodass von der Seiten-Schiene 25 keine Halteelemente 4 eingeführt werden können. Wenn die Weiche 24 zum Ausschleusen dient, dann werden bei der in Fig. 5 ausgezogen dargestellten Stellung der Weichen-Zunge 26 Halteelemente 4 seitlich aus der Transport-Schiene 1 herausgeführt, kommen also außer Eingriff mit den Mitnehmern 8. In der in Fig. 6 strichpunktiert dargestellten Stellung der Weichen-Zunge 26 findet dann kein Ausschleusen von Halteelementen 4 statt.

## Patentansprüche

1. Transport-System für hängende Gegenstände, insbesondere für auf Bügeln (16) hängende Kleidungsstücke,
- mit einer Transport-Schiene (1),
- mit einer in der Transport-Schiene (1) in einer Förderrichtung (3) bewegbar angeordneten Antriebs-Kette (2), die nach unten ragende Mitnehmer (8) aufweist, und
- mit in der Transport-Schiene (1) unterhalb der Antriebs-Kette (2) mittels Laufrollen (13) gelagerten, mittels der Antriebs-Kette (2) in Förderrichtung (3) bewegbaren Halteelementen (4) für die Gegenstände,
**dadurch gekennzeichnet,**
**dass** die Mitnehmer (8) bolzenartig ausgebildet sind,
**dass** die Halteelemente (4) nur um ein Paar Laufrollen (13) pendelnd in der Transport-Schiene (1) gelagert sind und nach oben ragende Ansätze (20) zum Eingriff in die Antriebs-Kette (2) zwischen zwei benachbarten Mitnehmern (8) aufweisen und
**dass** zwischen der Transport-Schiene (1) und den Halteelementen (4) Mittel vorgesehen sind, die ein Außereingriffbringen von Ansatz (20) und Mitnehmer (8) bei einer vorgegebenen Maximal-Neigung des Halteelementes (4) gegenüber einer Normalen auf der Transport-Schiene (1) in einer durch die Förderrichtung (3) aufgespannten vertikalen Transportebene verhindern.

2. Transport-System nach Anspruch 1, **dadurch gekennzeichnet,**
**dass** die Transport-Schiene (1) oberhalb der Laufrollen (13) mindestens einen Begrenzungs-Steg (18) aufweist und
**dass** der Ansatz (20) eines Halteelementes (4) einen den Begrenzungs-Steg (18) übergreifenden Anschlag (21) aufweist, der bei der vorgegebenen Maximal-Neigung des Halteelementes (4) zur Anlage an dem Begrenzungs-Steg (18) kommt.

3. Transport-System nach Anspruch 2, **dadurch gekennzeichnet,**
**dass** beiderseits des Ansatzes (20) zwei Begrenzungs-Stege (18) angeordnet sind und
**dass** der Anschlag (21) beide Begrenzungs-Stege (18) übergreift.

4. Transport-System nach Anspruch 2 oder 3, **dadurch gekennzeichnet, dass** der Ansatz (20) am Übergang zum Anschlag (21) eine Auskehlung (22) zur Aufnahme des unteren Endes des Mitnehmers (8) aufweist.

5. Transport-System nach Anspruch 2 oder 3, **dadurch gekennzeichnet, dass** der Anschlag (21) an seinen seitlichen Enden Keilflächen (23) aufweist.

6. Transport-System nach einem der Ansprüche 1 bis 5, **dadurch gekennzeichnet,**
**dass** der Abstand (a) benachbarter Mitnehmer (8) kleiner ist als die Erstreckung (b) der Halteelemente (4) in Förderrichtung (3).

7. Transport-System nach einem der Ansprüche 1 bis 6, **dadurch gekennzeichnet,**
**dass** die Laufrollen (13) auf unteren Führungs-Stegen (10) der Transport-Schiene (1) abgestützt sind.

8. Transport-System nach Anspruch 7, **dadurch gekennzeichnet,**
**dass** die Halteelemente (4) Tragteile (12) aufweisen, die nach unten zwischen den Führungs-Stegen (10) aus der Transport-Schiene (1) herausragen.

9. Transport-System nach Anspruch 8, **dadurch gekennzeichnet,**
**dass** die Tragteile (12) eine untere Aufnahme-Öffnung (14) für die zu transportierenden Gegenstände aufweisen.

10. Transport-System nach Anspruch 8 oder 9, **dadurch gekennzeichnet,**
**dass** an den Tragteilen (12) unterhalb der Transport-Schiene (1) ein Identifizierungs-Element (17) angebracht ist.

11. Transport-System nach einem der Ansprüche 1 bis 10, **dadurch gekennzeichnet,**
**dass** Weichen (24) mit seitlich an die Transport-Schiene (1) angefügten Seiten-Schienen (25) zum Einschleusen oder Ausschleusen von Halteelementen (4) vorgesehen sind.

## Claims

1. Transport system for suspended articles, in particular for items of clothing suspended from hangers (16),
- with a transport rail (1),
- with a drive chain (2) which is movably positioned in a conveying direction (3) in the transport rail (1) and has downwardly projecting entrainment means (8), and
- with retaining elements (4) for the articles, said retaining elements being mounted by rollers (13) in the transport rail (1) below the drive chain (2) and being movable in conveying direction (3) by the drive chain (2),
**characterised**
**in that** the entrainment means (8) are bolt-shaped,
**in that** the retaining elements (4) are mounted in the transport rail (1) so that they oscillate about only one pair of rollers (13) and have upwardly projecting lugs (20) for engagement into the drive chain (2) between two adjacent entrainment means (8), and
**in that** provided between the transport rail (1) and the retaining elements (4) are means preventing disengagement between lug (20) and entrainment means (8) where there is a predetermined maximum inclination of the retaining element (4) with respect to a normal on the transport rail (1) in a vertical transport plane spanned by the conveying direction (3).

2. Transport system according to claim 1, **characterised in that** the transport rail (1) has at least one delimiting web (18) above the rollers (13) and
**in that** the lug (20) of a retaining element (4) has a stop (21) which overlaps the delimiting web (18) and comes to rest against said delimiting web (18) when there is the predetermined maximum incline of the retaining element (4).

3. Transport system according to claim 2, **characterised in that** two delimiting webs (18) are positioned on both sides of the lug (20) and
**in that** the stop (21) overlaps both delimiting webs (18).

4. Transport system to claim 2 or 3, **characterised in that** at the transition to the stop (21), the lug (20) has a groove (22) for receiving the lower end of the entrainment means (8).

5. Transport system according to claim 2 or 3, **characterised in that** the stop (21) has wedged surfaces (23) on its lateral ends.

6. Transport system according to any one of claims 1 to 5, **characterised in that** the distance (a) between adjacent entrainment means (8) is smaller than the span (b) of the retaining elements (4) in the conveying direction (3).

7. Transport system according to any one of claims 1 to 6, **characterised in that** the rollers (13) are supported on lower guide webs (10) of the transport rail (1).

8. Transport system according to claim 7, **characterised in that** the retaining elements (4) have supporting parts (12) which project downwards from the transport rail (1) between the guide webs (10).

9. Transport system according to claim 8, **characterised in that** the supporting parts (12) have a lower receiving opening (14) for the articles to be transported.

10. Transport system according to claim 8 or 9, **characterised in that** an identification element (17) is attached to the supporting parts (12) below the transport rail (1).

11. Transport system according to any one of claims 1 to 10, **characterised in that** switches (24) with side rails (25) attached laterally to the transport rail (1) are provided for the inward transfer or outward transfer of retaining

## Revendications

1. Système de transport pour articles suspendus, plus particulièrement pour des vêtements suspendus à un cintre (16),
- avec un rail de transport (1),
- avec une chaîne motrice (2), placée dans le rail de transport (1), tournant dans un sens de transport (3), présentant des tocs d'entraînement (8) dressés vers le bas et
- avec des éléments de maintien (4) pour les articles, logés dans le rail de transport (1) sous la chaîne motrice (2) à l'aide de galets porteurs (13), se déplaçant dans le sens de transport (3) à l'aide de la chaîne motrice (2)
**caractérisé en ce que**
les tocs d'entraînement (8) sont conçus comme des boulons,
les éléments de maintien (4) sont logés dans le rail de transport (1) seulement **en ce qu'**ils oscillent sur une paire de galets porteurs (13) et présentent un embout (20) dressé vers le haut, leurs permettant de se fixer sur la chaîne motrice (2) entre deux tocs d'entraînement (8) contigus et
entre le rail de transport (1) et les éléments de maintien (4), des organes sont prévus pour empêcher le désengrènement de l'embout (20) et du toc d'entraînement (8) en cas d'inclinaison maximale par défaut de l'élément de maintien (4) par rapport à une perpendiculaire sur le rail de transport (1), dans un plan de transport vertical tendu par le sens de transport (3).

2. Système de transport selon la revendication 1, **caractérisé en ce que** le rail de transport (1) présente au moins une traverse de délimitation (18) au-dessus des tocs d'entraînement (13) et
**en ce que** l'embout (20) d'un élément de maintien (4) présente une butée (21) au-dessus de la traverse de délimitation (18), qui lors d'une inclinaison maximale par défaut de l'élément de maintien (4) vient se poser sur la traverse de délimitation (18).

3. Système de transport selon la revendication 2,
**caractérisé en ce que** des deux côté de l'embout (20) sont disposées deux traverses de délimitation (18) et
**en ce que** la butée (21) est au-dessus des deux traverses de délimitation (18).

4. Système de transport selon la revendication 2 ou 3, **caractérisé en ce que** l'embout (20) présente un congé de raccordement (22) au niveau du passage à la butée (21), permettant de prendre à l'extrémité inférieure du toc d'entraînement (8).

5. Système de transport selon la revendication 2 ou 3, **caractérisé en ce que** la butée (21) présente des extrémités latérales en coin (23).

6. Système de transport selon l'une des revendications 1 à 5, **caractérisée en ce que** l'écart (a) entre deux tocs d'entraînement (8) contigus est plus petit que la largeur (b) des éléments de maintien (4), dans le sens de transport (3).

7. Système de transport selon l'une des revendications 1 à 6, **caractérisée en ce que** les galets porteurs (13) sont posés sur des traverses de guidage inférieures (10) du rail de transport (1).

8. Système de transport selon la revendication 7, **caractérisée en ce que** les éléments de maintien (4) présentent des éléments porteurs (12), qui ressortent du rail de transport (1) vers le bas entre les traverses de guidage (10).

9. Système de transport selon la revendication 8, **caractérisée en ce que** les éléments porteurs (12) présentent une ouverture de réception (14) inférieure, pour les articles à transporter.

10. Système de transport selon la revendication 8 ou 9, **caractérisée en ce que** un élément d'identification (17) est placé sur les éléments porteurs (12) en dessous du rail de transport (1).

11. Système de transport selon l'une des revendications 1 à 10, **caractérisée en ce que** des appareils de voie (24) avec des rails latéraux (25) insérés sur les côtés du rail de transport (1) sont prévus pour introduire ou retirer des éléments de maintien (4).
